# EUROPEAN PATENT SPECIFICATION

(11) **EP 0 611 742 B1**
(45) Date of publication and mention of the grant of the patent: **18.06.1997**
(21) Application number: 94101596.8
(22) Date of filing: 03.02.1994
(51) Int. Cl.: C05F 9/02, C05F 17/02, C05F 17/00, B65F 5/00

(54) **Kitchen garbage disposal system**
Vorrichtung zur Entzorgung von Küchenabfällen
Dispositif d'élimination de déchets menagères

(30) Priority: 16.02.1993 JP 26720/93; 26.05.1993 JP 124309/93; 27.05.1993 JP 126247/93; 20.07.1993 JP 179138/93
(43) Date of publication of application: 24.08.1994
(73) Proprietor: SANYO ELECTRIC CO. LTD, Moriguchi-City, Osaka 570 (JP)
(72) Inventor: Morishita, Takuya, c/o SANYO ELECTRIC CO., LTD., Moriguchi-City, Osaka 570 (JP); Yasuda, Hideo, c/o SANYO ELECTRIC CO., LTD., Moriguchi-City, Osaka 570 (JP); Fukumoto, Akihiro, c/o SANYO ELECTRIC CO., LTD., Moriguchi-City, Osaka 570 (JP); Aida, Kenji, c/o SANYO ELECTRIC CO., LTD., Moriguchi-City, Osaka 570 (JP); Sasakura, Hiroyuki, c/o SANYO ELECTRIC CO., LTD., Moriguchi-City, Osaka 570 (JP); Hirata, Toshi, c/o SANYO ELECTRIC CO., LTD., Moriguchi-City, Osaka 570 (JP); Onishi, Yoshihisa, c/o SANYO ELECTRIC CO., LTD., Moriguchi-City, Osaka 570 (JP); Sibuya, Yasuyuki, c/o SANYO ELECTRIC CO., LTD., Moriguchi-City, Osaka 570 (JP); Ioku, Katsunori, c/o SANYO ELECTRIC CO., LTD., Moriguchi-City, Osaka 570 (JP)
(74) Representative: Selting, Günther, Dipl.-Ing.

(56) References cited:
- EP-A- 0 501 028
- GB-A- 2 196 614
- JP-U- 2 125 942
- US-A- 2 802 434
- US-A- 4 040 810
- PATENT ABSTRACTS OF JAPAN vol. 017, no. 685 (C-1142)15 December 1993 & JP-A-05 228 458 (TOYO ENG WORKS LTD) 7 September 1993
- PATENT ABSTRACTS OF JAPAN vol. 017, no. 208 (M-1401)23 April 1993 & JP-A-04 350 005 (MATSUSHITA ELECTRIC WORKS LTD) 4 December 1992

## Description

The present invention relates to a kitchen garbage disposal system to dispose of kitchen garbage consisting of kitchen garbage (food garbage) generated in a kitchen, by means of the decomposing action of aschelminthes such as philodina and diplogaster, and micro-organisms such as protozoa and bacteria.

One of the methods to dispose of kitchen garbage generated every day in the kitchens of homes and eating establishments utilizes the decomposing actions of micro-organisms. This method has been viewed as a promising technology because it helps reduce the volume of wastes and contributes to the reduction of processing load on the waste incineration facilities and sewage treatment plants, and is also favorable in the aspect of environment conservation.

As a kitchen garbage disposal apparatus, the compost vessel has long been known. It is a cylindrical vessel having a lid covering an opening on one side, and is partially embedded to an appropriate depth in the ground with another opening on the other side facing downward. After charging kitchen garbage into the vessel by opening the lid, the vessel is left to stand with the lid being closed, so that the micro-organisms reproducing in the soil decompose the kitchen garbage into compost.

However, progress of decomposing the kitchen garbage in the compost vessel is moderate and therefore the rate of composting is slow, thus the small processing capacity limits the applicability of the compost vessel. Also the compost vessel requires the existence of soil wherein it is embedded, and a larger processing capacity requires a vessel of greater volume. It also has a problem of foul odor generated in the process of decomposition leaking into the environment, which makes it unsuitable to the application in urban areas crowded with collective residential buildings. When used in an urban area, it also has a problem that the compost produced through the decomposition process is difficult to dispose of.

A method of grinding and dewatering kitchen garbage and automatically packing it in waste bags which are thereafter dumped has been proposed, for example, in the Japanese Patent Application Laid-Open No.4-156959 (1992). However, this method requires the disposal of the waste bags containing the kitchen garbage, resulting in the trouble of dumping operation and a problem in view of environment conservation.

Organic kitchen garbage disposal systems, wherein kitchen garbage is charged into a process vessel which houses a medium to cultivate micro-organisms, thereby to decompose the kitchen garbage by the action of the micro-organisms, are proposed in the Japanese Utility Model Application Laid-Open No.2-1291 (1990), and the Japanese Utility Model Application Laid-Open No.2-125942 (1990). These kitchen garbage disposal systems are installed outdoors because foul odor and vermin are likely to be generated in these apparatuses, thereby causing an inconvenience of making it necessary to carry garbage to the outdoor installation site.

In the Utility Model Application JP-2-1291 which represents the prior art as referred to in the preamble of claim 1, the outdoors garbage disposal vessel is provided with a mixing impeller for mixing the garbage with the medium. The vessel is ventilated through an opening with outside air. In winter cool air coming in through the opening can deteriorate or stop the decomposing process.

It is an object of the invention to provide a kitchen garbage disposal system which is easy to operate.

This object is, according to the invention, solved by the features of one of claims 1, 10 and 11.

In the kitchen garbage disposal system of the invention, kitchen garbage (organic wastes) generated in a kitchen is put into a garbage discharge port formed in a wall or windowsill of the kitchen or in a kitchen furniture such as a sink cabinet, passes through a discharge passage and is charged into a process vessel which is installed outdoors and houses a medium to cultivate aschelminthes such as philodina and diplogaster and micro-organisms such as protozoa and bacteria, wherein the medium and the charged kitchen garbage are mixed with each other by a mixing means installed in the process vessel, thereby to decompose the kitchen garbage by means of the aschelminthes and micro-organisms. Because kitchen garbage can be discharged from a garbage discharge port which opens indoors into the process vessel installed outdoors, user's convenience and ease of operation can be improved.

By installing an air blower to take in air from the garbage discharge port into the process vessel and purging the air into the outdoor atmosphere, foul odor can be prevented from leaking through the garbage discharge port even when the kitchen garbage becomes rotten in the garbage discharge passage, thereby making the user free from disagreeable feeling.

By forming, in a preferred embodyment of the invention, at least the inner surface of the discharge passage with a low-friction material, kitchen garbage can be prevented from sticking to the discharge passage thereby preventing the kitchen garbage from becoming rotten in the discharge passage.

By detecting, in a preferred embodyment, the kitchen garbage being discharged from the garbage discharge port into the process vessel and driving the mixing means accordingly, a failure in the process of the kitchen garbage due to user's failure to start the mixing means can be prevented. Also by installing water sprinkling means in the discharge passage, kitchen garbage sticking to the discharge passage can be washed out into the process vessel by the sprinkled water, thereby preventing the kitchen garbage from becoming rotten in the discharge passage.

Sensors to detect the overload state of the aschelminthes and micro-organisms may be installed to inform the user of the overload state.

Grinding means may be installed to grind organic wastes in a stage prior to the process vessel, processing time in the process vessel can be shortened.

By installing, in a preferred embodyment, outdoors both, a trash bin to accommodate ordinary garbage which cannot be decomposed by the aschelminthes and micro-organisms and the process vessel to decompose and dispose of the kitchen garbage outdoors, while providing separate discharge passages for the process vessel and the trash bin, the kitchen garbage and ordinary trash can be easily disposed of separately.

The above and further objects and features of the invention will more fully be apparent from the following detailed description with accompanying drawings.

Fig.1 is a cross sectional drawing illustrative of a kitchen garbage disposal system of a first embodiment of the invention.

Fig.2 is a sectional drawing in the front view illustrative of the kitchen garbage disposal system of the first embodiment.

Fig.3 is a top view of the first embodiment.

Fig.4 is an enlarged cross sectional drawing of a key portion in the first embodiment.

Fig.5 is a perspective view of a mixer screw in the first embodiment.

Fig.6 is an enlarged sectional drawing of a key portion in the first embodiment.

Fig.7 is a block diagram of a control system in the first embodiment.

Fig.8 is a cross sectional drawing illustrative of a kitchen garbage disposal system of a second embodiment of the invention.

Fig.9 is an enlarged sectional drawing of a key portion in the second embodiment.

Fig.10 is a cross sectional drawing illustrative of a kitchen garbage disposal system of a third embodiment of the invention.

Fig.11 is an enlarged sectional drawing of a key portion in the third embodiment.

Fig.12 is an enlarged sectional drawing of a key portion in the third embodiment.

Fig.13 is a cross sectional drawing illustrative of a kitchen garbage disposal system of a fourth embodiment of the invention.

Fig.14 is a front view illustrative of the kitchen garbage disposal system of the fourth embodiment.

Fig.15 is a sectional drawing in the front view illustrative of a kitchen garbage disposal system of a fifth embodiment of the invention.

Fig.16 is a cross sectional drawing illustrative of the kitchen garbage disposal system of the fifth embodiment.

Fig.17 is a block diagram of a control system in the fifth embodiment.

Fig.18 is a plan view drawing illustrative of a display section in the fifth embodiment.

Fig.19 is a graph illustrative of change in the weight of the process vessel with time in the fifth embodiment.

Fig.20 is a sectional drawing in the front view illustrative of a kitchen garbage disposal system of a sixth embodiment of the invention.

Fig.21 is a cross sectional drawing illustrative of the kitchen garbage disposal system of the sixth embodiment.

Fig.22 is a cross sectional drawing illustrative of a kitchen garbage disposal system of a seventh embodiment of the invention.

Fig.23 is a sectional drawing in the front view illustrative of the kitchen garbage disposal system of the seventh embodiment.

Fig.24 is a cross sectional drawing illustrative of the kitchen garbage disposal system of the seventh embodiment.

Fig.25 is a front view drawing illustrative of a waste disposal system in an eighth embodiment of the invention.

Fig.26 is a front view drawing illustrative of the garbage charging side of the waste disposal system of the eighth embodiment.

Fig.27 is a cross sectional drawing in the front view illustrative of the waste disposal system of the eighth embodiment.

Fig.28 is a cross sectional drawing in the side view in A-A line in Fig.27.

The invention will now be described in detail with reference to the drawings illustrative of the preferred embodiments.

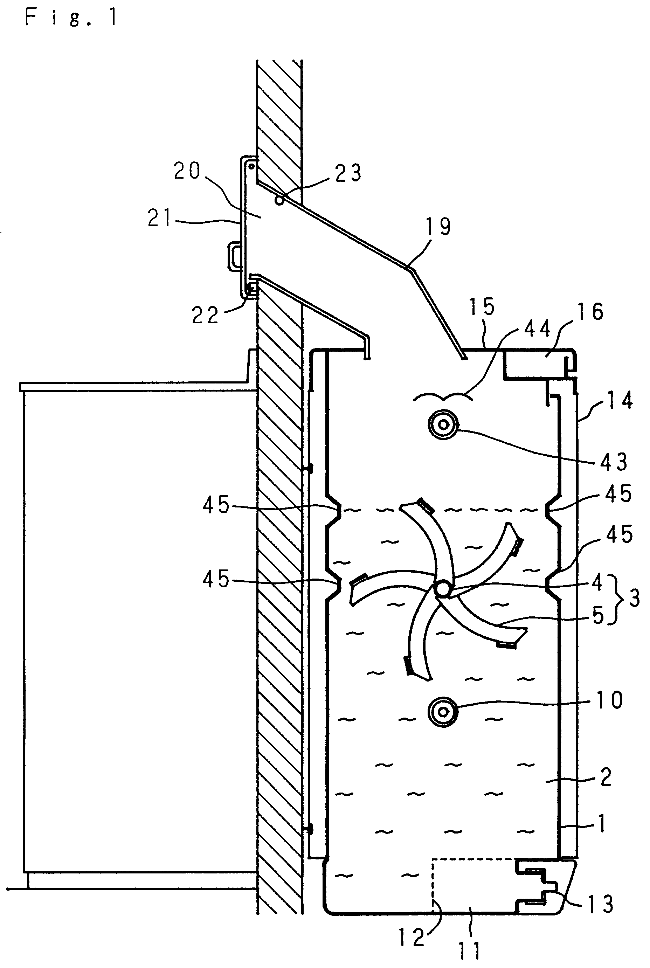

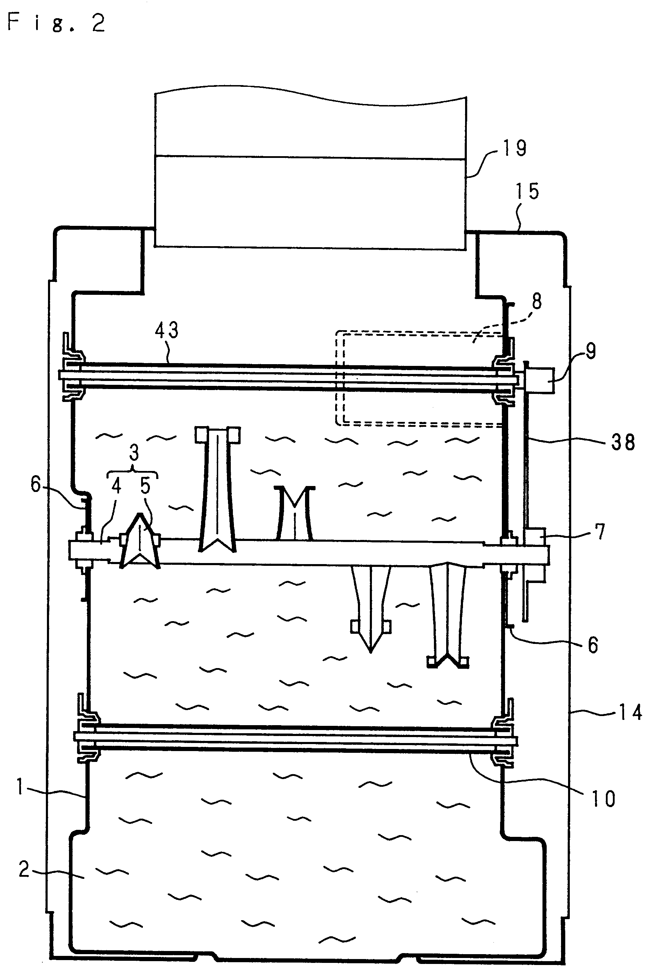

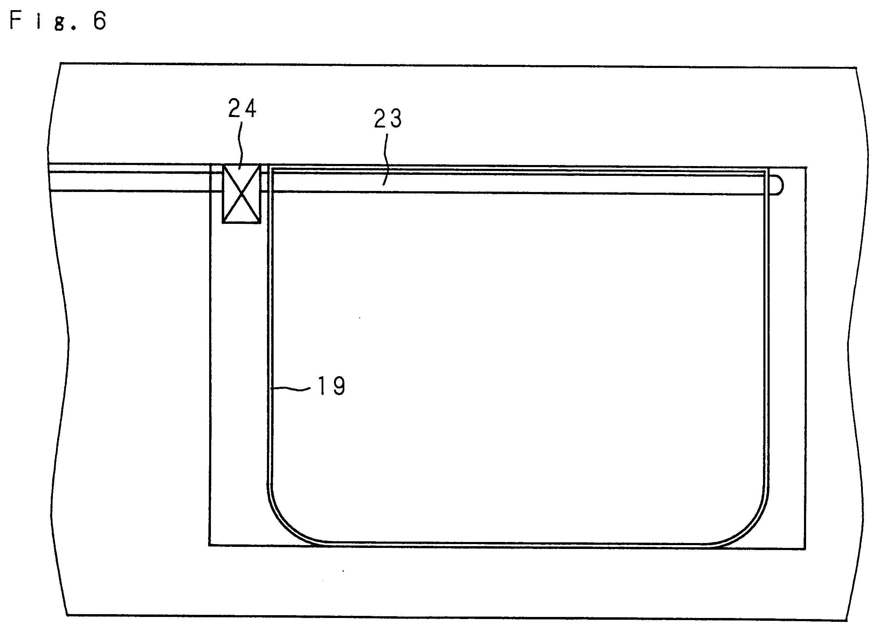

The first embodiment of the invention will first be described below with reference to Fig.1 through Fig.7.

Numeral 1 denotes a process vessel made of a synthetic resin having an opening at the top and containing a medium 2. The medium 2 has a culture medium for aschelminthes and micro-organisms, for example, fine wooden pieces such as saw dust and rice chaff, rice bran and soil. In this embodiment, fine wooden pieces proposed in the the Japanese Patent Application Publication No.2-34679 (1990) "A method of microbiological processing of sludge by means of fine wooden pieces" are used. The medium 2 is formed in porous state to have high permeability for air and water and have such a property as to keep water and air therein providing a favorable environment for the reproduction of aschelminthes and micro-organisms. When the medium 2 is mixed with kitchen garbage having organic wastes, aschelminthes such as philodina and diplogaster, and micro-organisms such as protozoa and bacteria adhering onto the kitchen garbage reproduce and decompose the kitchen garbage so that it eventually turn into carbon dioxide and water, thereby causing the kitchen garbage to disappear.

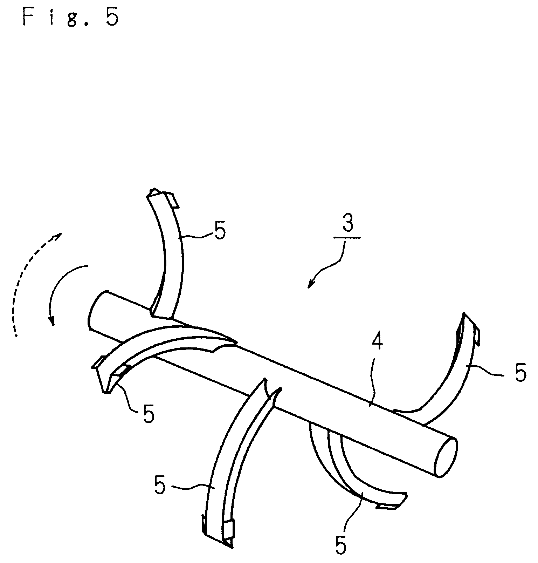

The process vessel 1 has a mixer screw 3 installed therein having a rotary shaft 4 installed freely rotatably on reinforcement plates 6 which are installed on both side walls of the process vessel 1 and a plurality of mixing vanes 5 fixed on the rotary shaft 4, while the rotary shaft 4 and the mixing vanes 5 are made of stainless steel. The mixer screw 3 is formed to have substantially V-shaped cross section as shown in Fig.5 warping toward the ridge line thereof, and is welded on the rotary shaft 4 in a spiral configuration. A sprocket 7 is fixed on the rotary shaft 4. A chain 38 is set to link the sprocket 7 and a sprocket 9 which is fixed on a motor 8 which is fixed via the reinforcement plate 6 on the upper portion of the process vessel 1, so that the drive force of the motor 8 is transmitted by the chain 38 to drive the mixer screw 3 to rotate.

A heater section 10 comprising a heater installed in a stainless steel pipe is installed below the mixer screw 3 in the process vessel 1, to keep the medium 2 as a whole at such a temperature that the activity of the aschelminthes and micro-organisms cultivated in the medium 2 is activated and reproduction of vermin in the kitchen garbage can be prevented, about 20°C to 45°C in this embodiment.

A drainage section 11 partitioned by a metallic partition plate 12, having multitude of holes small enough to keep the medium 2 from leaking therethrough being formed therein, is installed in the lower part of the process vessel 1, with a drainage pipe not shown in the drawing being connected to a drainage port 13 thereby to drain waste water into a water purification tank or sewage.

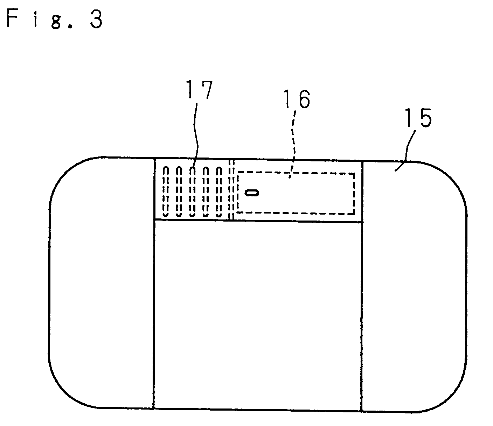

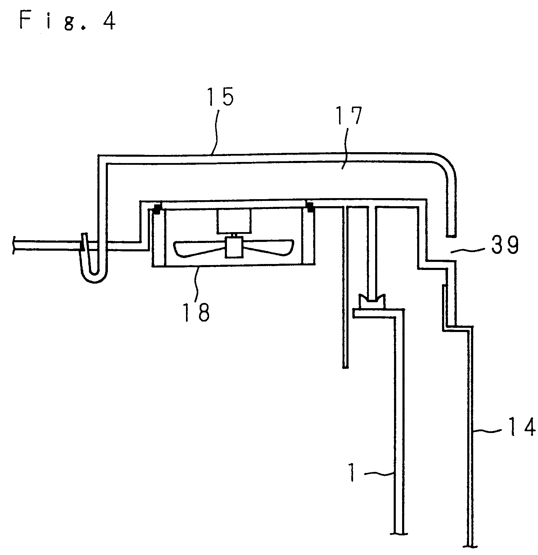

The process vessel 1 is surrounded by a metallic side wall 14 made in a cylindrical shape, and the side wall 14 is fixed on an outside wall of a house by means of fixtures not shown. A top plate 15 made of a synthetic resin is placed on the side wall 14 being fixed thereto. The top plate 15 is provided with a circuit board housing chamber 16 which is water-tightly separated from the inside of the process vessel 1 and from the outside, and an exhaust chamber 17 formed adjacent to the circuit board housing chamber 16 communicating the inside and outside of the process vessel 1, as shown in Fig.3. A blower 18 is installed below the exhaust chamber 17 as shown in Fig.4, so that air taken into the process vessel 1 from a garbage discharge port 20 through a discharge duct 19 is purged from an exhaust port 39 to the outside atmosphere via the exhaust chamber 17.

An end of the discharge duct 19 passes through the top plate 15 and faces the process vessel 1, and another end passes through a wall of the house and opens at a position a little above the sink cabinet of the kitchen to serve as the garbage discharge port 20. The discharge duct 19 is either made of a low friction material such as olefin resin or high-density polyethylene resin, or made of resin or metal with the inner surface being coated with a low friction material such as teflon.

A lid 21 is pivoted on the wall of the house capable of swinging freely to open and close the garbage discharge port 20. A sensor 22 to detect the state of the lid 21, whether it opens or closes the garbage discharge port 20, is attached to the discharge duct 19, to shut down the power supply to the motor 8 when the lid 21 is open, and supplies power to the motor 8 when the lid 21 closes again after opening the garbage discharge port 20, thereby to mix the kitchen garbage charged into the process vessel 1 from the garbage discharge port and the medium 2.

A water sprinkling pipe 23 having multitude of sprinkling holes is installed at the top of the discharge duct 19 on the garbage discharge port 20 side thereof. Sprinkling of water in the discharge duct 19 is controlled by an electromagnetic valve 24 installed in a space between the wall and the discharge duct 19.

A heater section 43 comprising a heater installed in a stainless steel pipe is placed in a space above the medium 2 in the upper part of the process vessel 1. A reflector 44 is installed above the heater section 43 to reflect the radiation generated by the heater section 43 toward the side walls of the process vessel 1, to eradicate larvae of vermin having a habit of crawling upward along the side wall of the process vessel 1.

Imagoes and larvae of vermin have a habit of coming out of the medium 2 onto thereof and, even when the imagoes and larvae of the vermin are mixed into the medium 2 by the rotation of the mixer screw 3, they come out onto the medium 2 again in a certain period of time. To counter this, the heating section 43 is energized to heat up in a specified period of time required for most of the vermin mixed into the medium 2 by the rotation of the mixer screw 3 to come out onto the medium 2 after the motor 8 stopped operation, to keep the temperature of the space above the medium 2 in the process vessel 1 at about 50 to 65°C where the imagoes and larvae of the vermin perish but the aschelminthes and micro-organisms in the medium 2 do not die, thereby the vermin are surely extinct.

The process vessel 1 has a plurality of reinforcement recesses 45 provided on the side face thereof toward the inner face of the process vessel 1, with the upper reinforcement recess 45 serving as the mark of standard quantity of the medium 2 contained in the process vessel 1. Although the medium 2 consisting of fine wooden pieces is hardly decomposed by the aschelminthes and micro-organisms, it decreases in a long period of operation due to drainage together with the discharged water. When a user look into the process vessel 1 by opening the lid 21, if the upper reinforcement section 45 is not covered by the medium 2, it indicates that the medium 2 is short of the standard quantity, thus the user should supply a required amount of medium 2. Consequently, the quantity of the medium 2 in the process vessel 1 can be checked with a simple constitution thereby making it possible to maintain high garbage processing capability.

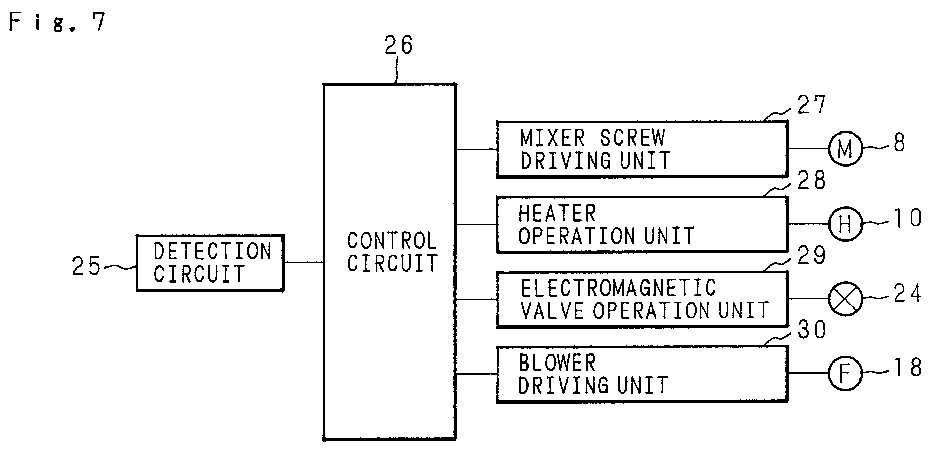

Now the control system of the first embodiment will be described below with reference to Fig.7. Numeral 26 denotes a control circuit comprising a microcomputer. A detector circuit 25 having a sensor 22 is connected to the input side of the control circuit 26, and a mixer screw driving unit 27 to control the motor 8 driving the rotation of the mixer screw 3, a heater operation unit 28 to control the energization of the heater of the heating section 10, a electromagnetic valve operation unit 29 which controls the operation of the electromagnetic valve 24, and a blower driving unit 30 which drives the blower 18 are connected to the output side of the control circuit 26.

Kitchen garbage generated during kitchen work is put into the garbage discharge port 20 via the discharge duct 19 into the process vessel 1 by opening the lid 21. Because the discharge duct 19 is made of a low friction material, or at least coated with a low friction material on the inner surface thereof, the kitchen garbage enters smoothly into the process vessel 1 without sticking to the inner surface of the discharge duct 19 and becoming rotten therein. And if the kitchen garbage should ever become rotten in the discharge duct 19, foul smell will never be allowed to leak into the kitchen and annoy the user, because the blower 18 sucks air via the discharge duct 19.

When charging of the kitchen garbage is completed, the lid 21 is closed. Upon detection of closure of the lid 21 by the sensor 22, the control circuit 26 controls the motor 8 and the electromagnetic valve 24 according to the signal from the sensor 22. If the lid 21 has not been operated for a specified period of time, 10 seconds in this embodiment, after the sensor 22 detected closure of the lid 21, the control circuit 26 opens the electromagnetic valve 24 to cause water from the sprinkler pipe 23 to be sprinkled in the discharge duct 19 thereby cleaning the inside of the discharge duct 19. Because the control circuit 26 controls water to be supplied to the sprinkler pipe 23 upon a lapse of a specified time after closing the garbage discharge port 20 with the lid 21, water is not sprinkled in the discharge duct 19 every time the lid 21 is opened, even when the user opens the lid 21 frequently to discharge kitchen garbage generated in a series of kitchen works, thus wasteful use of water is prevented.

The control circuit 26 controls the motor 8 to rotate clockwise to cause the mixer screw 3 to rotate in the direction indicated by the arrow of solid line shown in Fig.5. Because the mixer screw 3 rotates toward the ridge line side of the V-shaped cross section of the mixing vane 5, the kitchen garbage and the medium 2 are easily forced to move in the axial direction, allowing the mixer screw 3 to rotate with a relatively small load. Also because the mixing vanes 5 are warped toward the ridge line side, they are capable of efficiently bringing the garbage located on the medium 2 into the medium 2, so that the garbage and the medium 2 are mixed with each other efficiently in a short period of time. Moreover, because the mixing vanes 5 are arranged in a spiral configuration, it moves the garbage and the medium 2 not only in the rotating direction but also in the axial direction while mixing them, thereby improving the mixing efficiency further.

After the motor 8 has been rotating clockwise for a specified period of time, 20 seconds in this embodiment, the control circuit 26 stops the operation and, after a specified period of time required for the motor 8 to stop completely, 3 seconds in this embodiment, controls the motor 8 to rotate counterclockwise thereby to cause the mixer screw 3 to rotate in the direction indicated by the arrow of dashed line shown in Fig.5. Because the motor 8 rotates counterclockwise after completely stopping, counter-electromotive force is not generated when the motor 8 is started, thereby elongating the service life of the motor 8. When the motor 8 is rotating counterclockwise, the mixing vanes 5 mix the kitchen garbage and the medium 2 while forcing them to move outward, thus pressing the garbage against the side wall of the process vessel 1 to grind it. Although the mixer screw 3 is loaded more heavily when rotating in this direction than in the case of clockwise rotation, it provides higher grinding effect.

After the motor 8 has been rotating counterclockwise for a specified period of time, 10 seconds in this embodiment, the control circuit 26 stops the operation and, after a specified period of time required for the motor 8 to stop completely, controls the motor 8 to rotate clockwise again. After the motor has repeated clockwise and counterclockwise rotation alternately for 20 minutes, the operation is stopped.

When kitchen garbage is charged into the process vessel 1, aschelminthes such as philodina and diplogaster and micro-organisms such as protozoa and bacteria carried by the garbage reproduce on the medium 2, so that the garbage is digested mainly by the philodina, diplogaster and protozoa, thereby to disappear. Because the kitchen garbage charged into the process vessel 1 has been ground between the mixer screw 3 and the side wall of the process vessel 1, it is decomposed and disappear in a relatively short period of time. Also because the medium 2 is kept at a temperature favorable for the activities of the aschelminthes and micro-organisms by the heating section 10, the aschelminthes and micro-organisms are made active thereby further improving the efficiency of decomposing and disposing of the kitchen garbage.

Water supplied into the process vessel 1 together with the garbage is discharged into the drainage section 11 together with water generated by the decomposition of the garbage. Intermediate products of the decomposition, namely sugars, amino acids, organic acids, etc., are decomposed by the microorganisms, particularly by bacteria, which reproduce on the medium 2. Excreta and dead bodies of the aschelminthes and micro-organisms are also decomposed by the bacteria. Due to the food chain of the aschelminthes and micro-organisms described above, kitchen garbage can be decomposed almost completely without no significant foul odor being released nor remnant being left. As a result, it is possible to suppress the generation of compost and to decrease the BOD level in the discharged water.

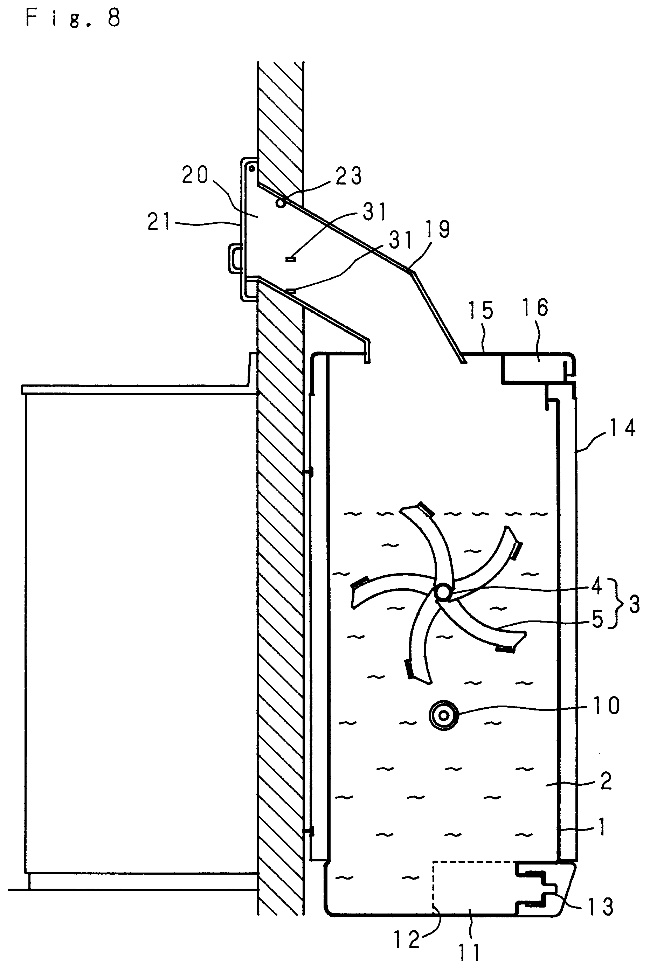

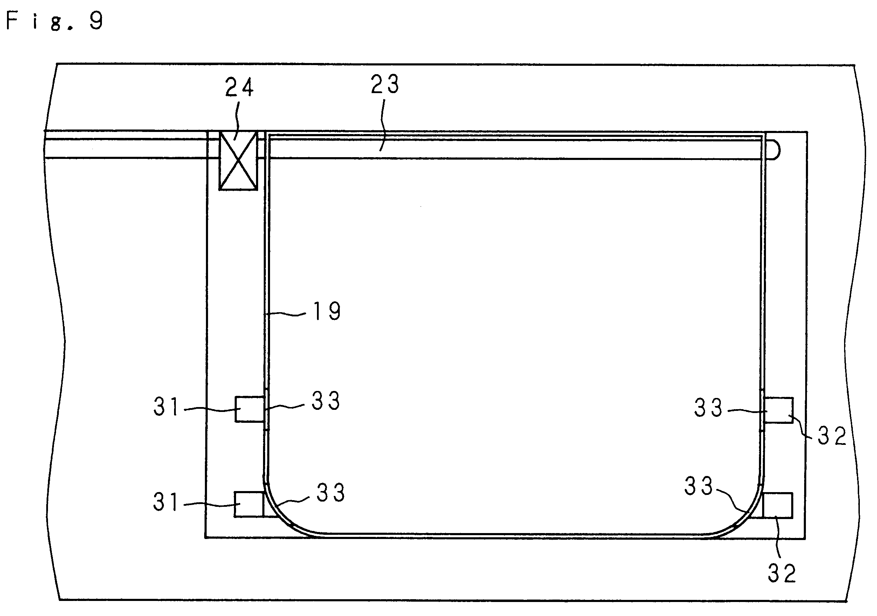

The second embodiment of the invention will now be described below with reference to Fig.8 and Fig.9. The components identical with those of the first embodiment are assigned the same numerals and a description thereof will be omitted.

Although charging of kitchen garbage is detected by the opening of the lid 21 in the first embodiment, this arrangement may be replaced by such an arrangement as shown in Fig.8 and Fig.9 wherein an optical sensor comprising a light emitter 31 and a light detector 32 is installed in the discharge duct 19, and kitchen garbage is detected by a change in the light intensity received by the light detector 32 caused by the kitchen garbage passing between the light emitter 31 and the light detector 32, and the motor 8 and the electromagnetic valve 24 are controlled accordingly. In the second embodiment, a plurality of optical sensors are installed in the discharge duct 19 for reliable detection of kitchen garbage passing through the discharge duct 19. The light emitter 31 and the light detector 32 are arranged to emit and receive light via a transparent material 33 installed on an opening formed in the discharge duct 19 in water-tight contact, to protect the light emitter 31 and the light detector 32 from the water sprinkled from the sprinkler pipe 23 in the discharge duct 19. In this constitution, because kitchen garbage charged from the garbage discharge port 20 is detected by the optical sensor, the mixer screw 3 is automatically driven upon charging of the garbage, thereby improving the ease of operation.

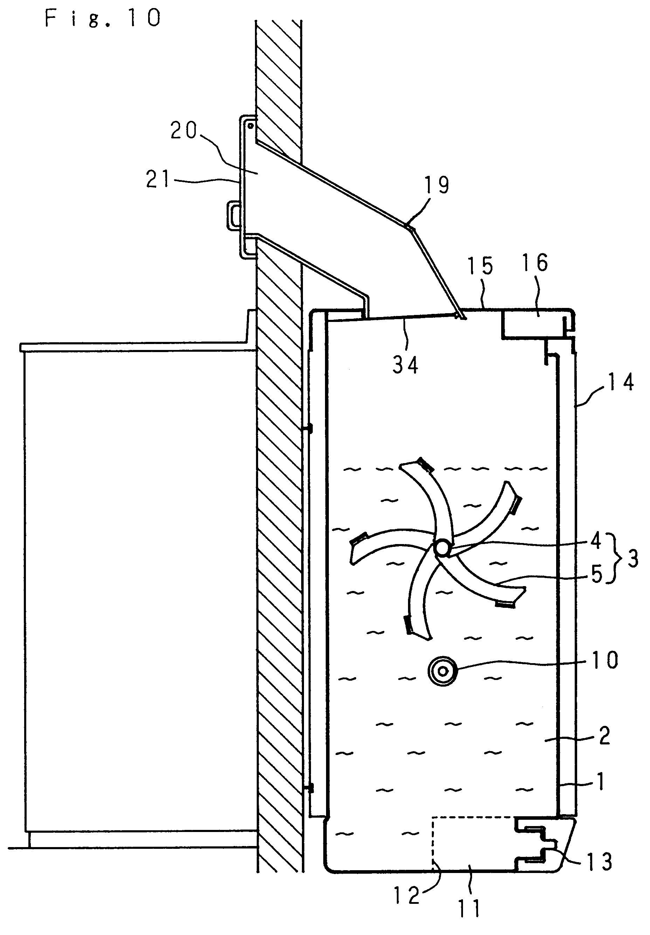

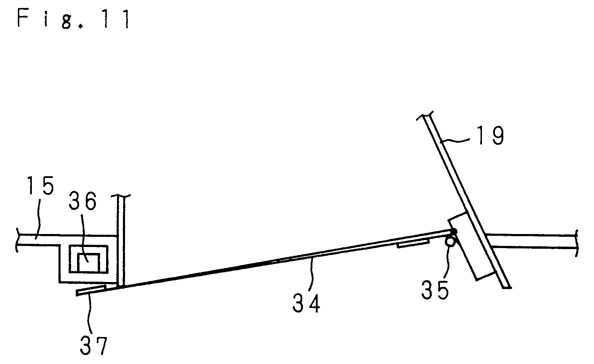

The third embodiment of the invention will now be described below with reference to Fig.10 through Fig.12. The components identical with those of the first embodiment are assigned with the same numerals and a description thereof will be omitted.

A shutter 34 is installed at the opening of the discharge duct 19 on the process vessel 1 side being free to swing. The shutter 34 receives a force from a spring 35 in such a direction as to normally close the discharge duct 19. The shutter 34 is either made of a low friction material such as olefin resin or high-density polyethylene resin, or made of a resin or metal sheet with the surface being coated by a low friction material such as teflon, to prevent kitchen garbage from sticking thereon. The spring 35 is set to exert such a force that the shutter 34 is easily opened by the weight of the kitchen garbage when the kitchen garbage is charged onto the shutter 34. A reed switch 36 is installed on the top plate 15 to detect opening of the shutter 34 by sensing the magnetic flux of a magnet 37 fixed on the shutter 34, thereby to control the motor 8 and the electromagnetic valve 24.

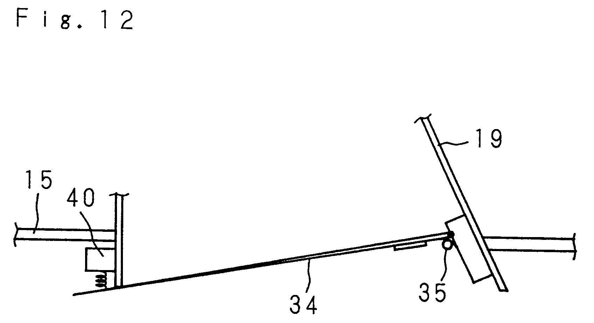

In Fig.12 illustrative of a variation of the third embodiment, a microswitch 40 is installed near the opening of the discharge duct 19 on the process vessel 1 side, which is turned on when the shutter 34 is opened by charging of kitchen garbage, and is returned by the spring 35 to close the discharge duct 19, thereby to detect the kitchen garbage being charged, upon which the motor 8 and the electromagnetic valve 24 are driven to mix the kitchen garbage and the medium 2. In this constitution, because kitchen garbage charged from the garbage discharge port 20 forces the shutter 34 open which returns by the spring 35 to close the discharge duct 19 and turns the microswitch on thereby starting the mixer screw 3. Thus the mixer screw 3 is automatically driven upon charging of the garbage, thereby improving the ease of operation.

In the first through third embodiments, although the control circuit 26 is made in such a constitution as to open the electromagnetic valve 24 so that water is sprinkled from the sprinkler pipe 23 into the discharge duct 19 to clean the inside of the discharge duct 19 when the lid 21 is not operated for a specified period of time after the sensor 22 detected closing of the lid 21, namely when charging of the kitchen garbage is completed, it may also be made in such a constitution as water is sprinkled in the discharge duct 19 simultaneously as the lid 21 is opened. In such a constitution, because kitchen garbage is charged while sprinkling water in the discharge duct 19, sticking of kitchen garbage onto the discharge duct 19 is surely prevented and leakage of foul odor through the garbage discharge port 20 can be prevented.

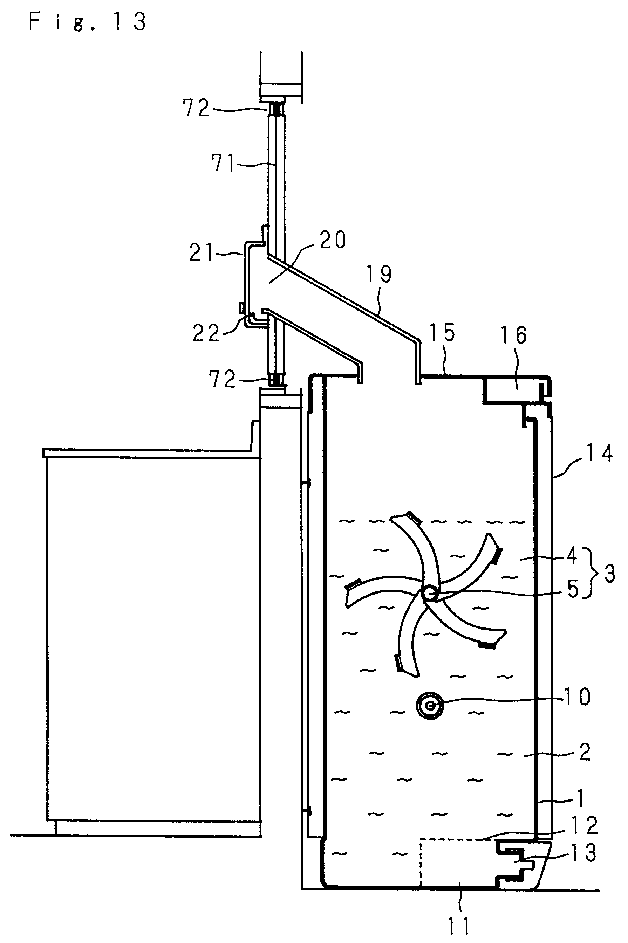

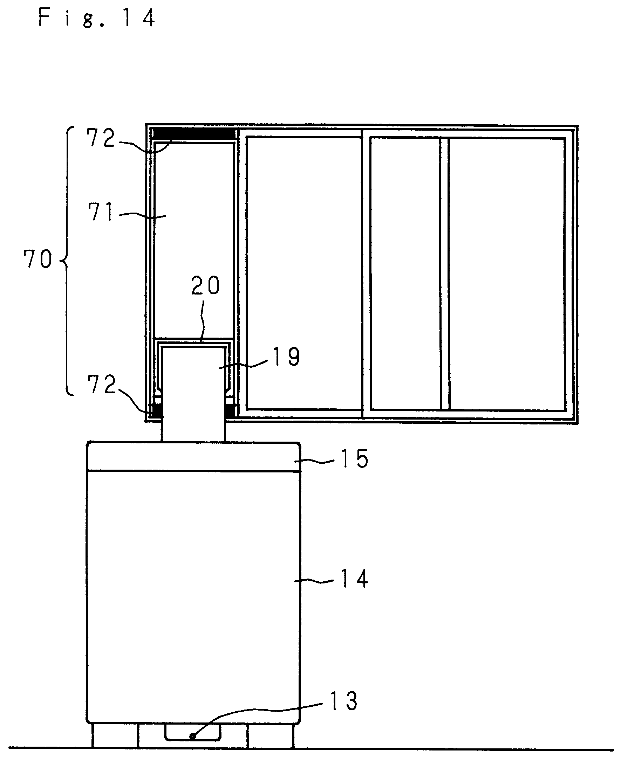

The fourth embodiment of the invention will now be described below with reference to Fig.13 and Fig.14. The components identical with those of the first embodiment are assigned the same numerals and a description thereof will be omitted.

Numeral 70 denotes a mount frame installed on a window of the house, a kitchen window in this embodiment, by means of screws not shown. The mount frame 70 comprises a fixed frame 71 fixed on the window frame and adjustable frames 72, 72 which are arranged to slide freely upward or downward relative to the fixed frame 71 in order to adjust the height of the mount frame. The garbage discharge port 20 communicating to the discharge duct 19 is formed in the fixed frame 71. An end of the discharge duct 19 passes through the top plate 15 and faces the process vessel 1, and another end is connected to the garbage discharge port 20 of the mount frame 70.

When the process vessel 1 is to be installed, the adjustable frame 72 below the fixed frame 71 is fixed below the window frame by means of set screws and the adjustable frame 72 above the fixed frame 71 is fixed above the window frame by means of set screws, and the lengths of the window frame and the mount frame 70 are adjusted and fixed. Then the fixed frame 71 is slid to adjust the garbage discharge port 20 of the fixed frame 71 to such a height that allows installation of the discharge duct fixed to the process vessel 1, and is fixed.

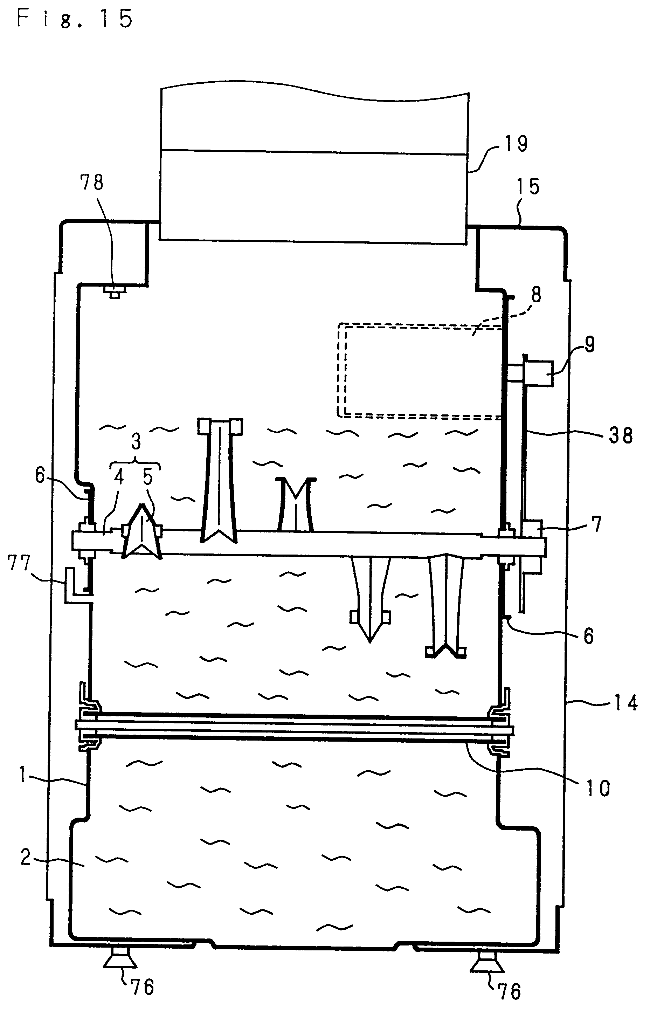

The fifth embodiment of the invention will now be described below with reference to Fig.15 through Fig.19. The components identical with those of the first embodiment are assigned with the same numerals and a description thereof will be omitted.

In the fifth embodiment, a weight sensor 76 is installed on the bottom of the process vessel 1 to detect the weight of the process vessel 1. A water level sensor 77 to detect the water level in the process vessel 1 is installed on the intermediate side wall of the process vessel 1.

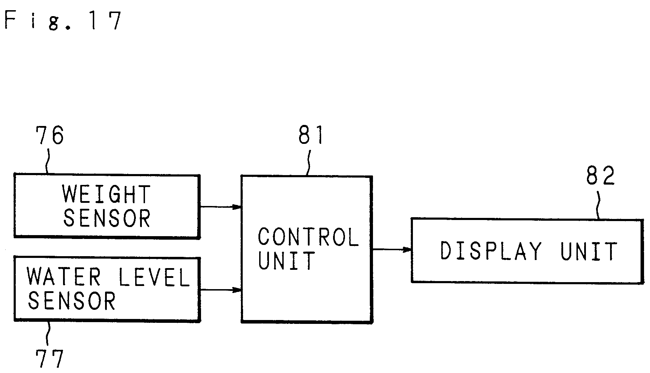

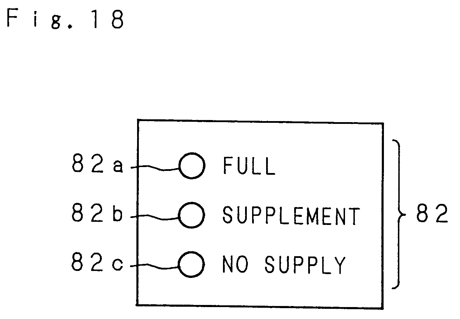

Fig.17 is a block circuit diagram of the control system in the fifth embodiment. Connected to input terminals of a control unit 81 which controls the garbage processing state are the weight sensor 76 and the water level sensor 77, and output terminals of the control unit 81 are connected to a display unit 82 which displays the processing state. Fig.18 is a plan view drawing of the display unit 82 which is installed, for example, near the sink cabinet in the house.

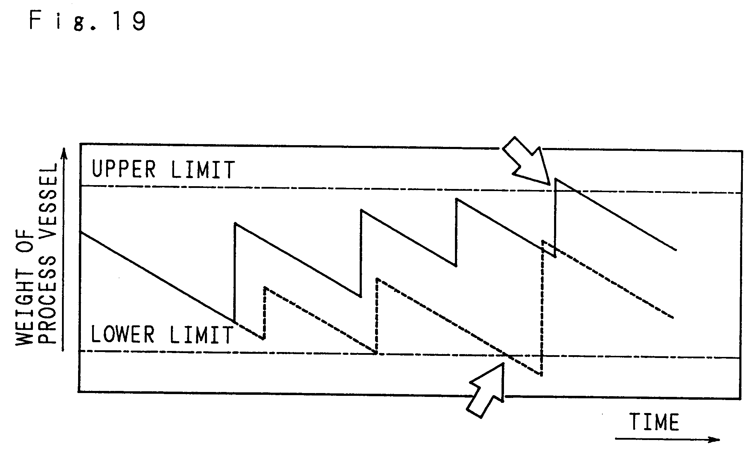

Control of the processing operation based on the result of detection by the weight sensor 76 will now be described below. The weight sensor 76 detects the weight of the process vessel 1 and outputs the result of detection to the control unit 81. The control unit 81 monitors the state of such process in the process vessel 1 as described above through the result of detection by the weight sensor 76. Fig.19 is a schematic diagram illustrative of the change in the detection data output from the weight sensor 76 with time. The weight of the process vessel 1 shows a sudden increase when garbage is introduced, by the amount of the garbage introduced, then gradually decreases with time as the decomposition process proceeds, thus showing a saw-teeth like changing pattern as shown in the drawing. While the capacity of processing kitchen garbage in the process vessel 1 depends on the state of reproduction of the aschelminthes and micro-organisms in the medium 2, the state of reproduction reaches an equilibrium upon a lapse of a specified period of time after the start of operation, thereby providing always stable processing capacity substantially corresponding to the quantity of the medium 2. Thus when the kitchen garbage is charged frequently or in an excessive quantity, the weight of the process vessel 1 gradually increases with time as indicated by the solid line in the drawing.

When the weight of the process vessel 1 as recognized according to the input from the weight sensor 76 exceeds a specified upper limit, it is judged in the control unit 81 that an excessive amount of kitchen garbage has been charged into the process vessel 1 beyond its processing capacity and that complete decomposition would be made impossible in the subsequent process. With recognizing the state of overload, the control unit 81 sends a display command to the display unit 82 in the timing indicated by a white-inside arrow in the drawing, so that the operator is notified to refrain from charging the kitchen garbage. According to this display command, a full lamp 82a (see Fig.18) illuminates on the display unit 82. Thus by limiting the charging of the kitchen garbage according to the illumination of the full lamp 82a, processing of the kitchen garbage in the process vessel 1 can be always maintained in a proper state. Although the medium 2 in the process vessel 1 usually needs not be replenished, it leaks to the outside together with water during processing, thereby gradually decreasing with time. In case such a decrease of the medium 2 happens, the weight of the process vessel 1 decreases over a long period of time as indicated by the dashed line in Fig.19.

When the weight of the process vessel 1 as recognized according to the input from the weight sensor 76 decreases below a specified lower liOit, it is judged in the control unit 81 that the medium 2 has decreased and needs to be replenished. Then the control unit 81 sends a display command to the display unit 82 in the timing indicated by a white-inside arrow in the drawing, so that the user is notified to supply the medium 2. According to this display command, a supplement lamp 82b (see Fig.18) illuminates on the display unit 82. Thus decrease in the processing capacity due to a shortage of the medium 2 can be surely prevented by replenishing the medium 2 according to the illumination of the supplement lamp 82b.

The result of detecting the weight of the process vessel 1 by the weight sensor 76 represents the state of processing in the process vessel 1, and therefore may be used in other purposes than illuminating the full lamp 82a to control the quantity of kitchen garbage charged and illuminating the supplement lamp 82b to notify to replenish the medium 2. For example, a change in the weight of the process vessel 1 as shown in Fig.19 may be displayed in a graph against an appropriate time scale for the user to see the display and decide whether the kitchen garbage disposal process in the process vessel 1 is proceeding in a satisfactory state or not, and whether any trouble has occurred in the process vessel 1.

As described above, because the weight sensor 76 is provided to detect the weight of the process vessel 1 so that the kitchen garbage disposal process in the process vessel 1 can be monitored by means of the result of detection by the weight sensor 76, the inside of the process vessel 1 can be always kept in a suitable environment to allow the aschelminthes and micro-organisms in the medium 2 to decompose the kitchen garbage completely, thereby making it possible to dispose of the kitchen garbage in a sanitary condition without trouble.

An operation to detect the overload state when there is too much kitchen garbage for aschelminthes and micro-organisms to decompose in the process vessel 1 by means of the water level sensor 77 and the control operation based on the result of the detection will now be described below. An overload state of the aschelminthes and micro-organisms is detected by means of the water level sensor 77 installed on the side wall of the process vessel 1. When too much kitchen garbage has been charged into the process vessel 1 making the aschelminthes and micro-organisms unable to decompose it completely, the water content in the process vessel 1 increases to turn the kitchen garbage in the process vessel 1 into paste-like condition, wherein adhesion force in the medium 2 increases and water begins to permeate and accumulate in the circumferential portion which is less influenced by the rotation of the mixer screw 3. It has been verified experimentally that water level in this portion corresponds to the degree of overload of the aschelminthes and micro-organisms, and therefore the degree of overload of the aschelminthes and micro-organisms can be detected by measuring the water level in this portion. When the quantity of kitchen garbage charged into the process vessel 1 increases beyond the processing capacity of the aschelminthes and micro-organisms, and accordingly the result of detection by the water level sensor 77 reaches the upper limit, the result of detection is input to the control unit 81 to illuminate a no supply lamp 82c (see Fig.18) on the display unit 82, giving a warning to the user not to charge kitchen garbage any more.

As described above, because the sensor to detect the overload state of the aschelminthes and micro-organisms is provided, the state of incomplete processing of the garbage can be quickly dissolved, making a continuous operation possible under a stable condition.

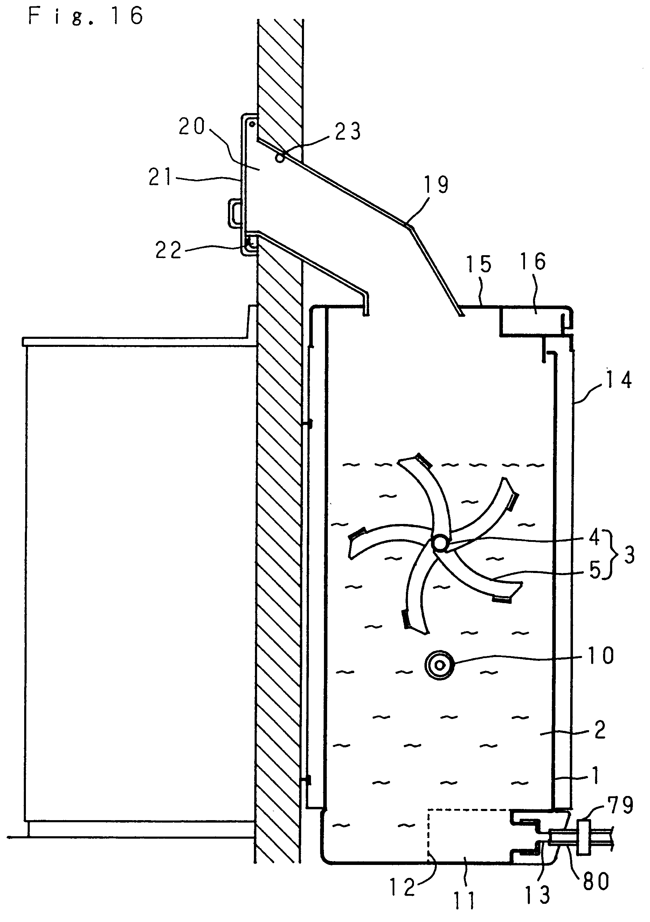

The sensor to detect the overload state of the aschelminthes and micro-organisms is not limited to the weight sensor 76 and the water level sensor 77 described above, but an odor sensor 78 to detect an odor in the process vessel 1 or a BOD sensor 79 to detect the BOD level in the waste water discharged from the process vessel 1 may be used instead. For example, the odor sensor 78 is installed on the upper wall of the process vessel 1 and the BOD sensor is installed in the drainage pipe 80 which communicates with the drainage port 13, as shown in Fig.15 and Fig.16.

In the fifth embodiment, clogging of the drainage port 13 can also be detected based on the result of detection by the water level sensor 77 installed on the side wall of the process vessel 1. By notifying the result of this detection to the user prompting to clean the drainage port 13, decrease in the processing capability due to the clogging is prevented and the drainage port 13 is made to be cleaned as necessary. Also by making this notifying operation on condition that the lid 21 is detected to be open, namely that the lid 21 is opened to charge another garbage, notification is certainly given to the operator.

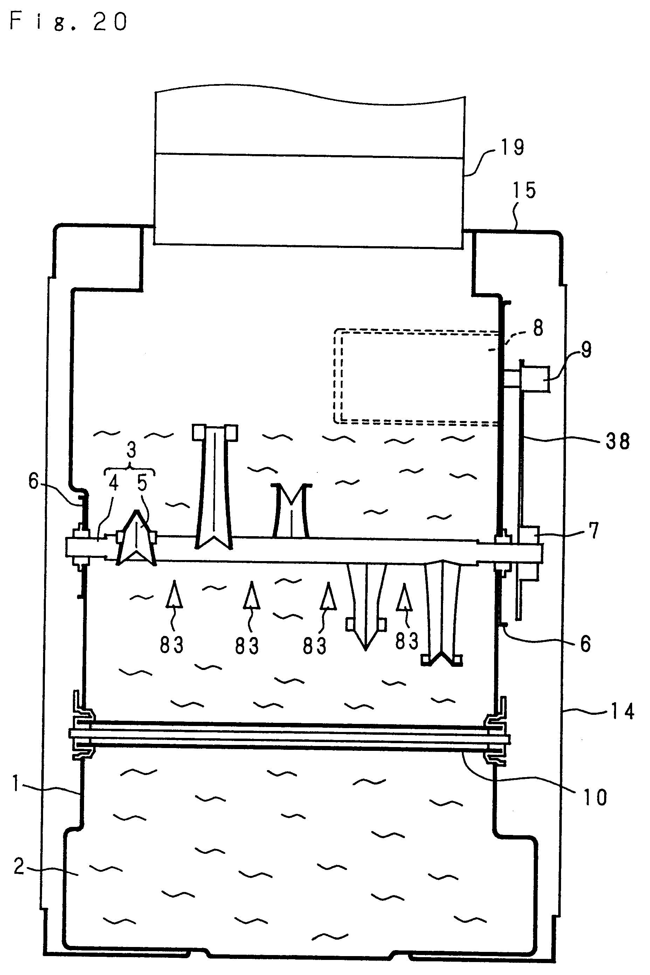

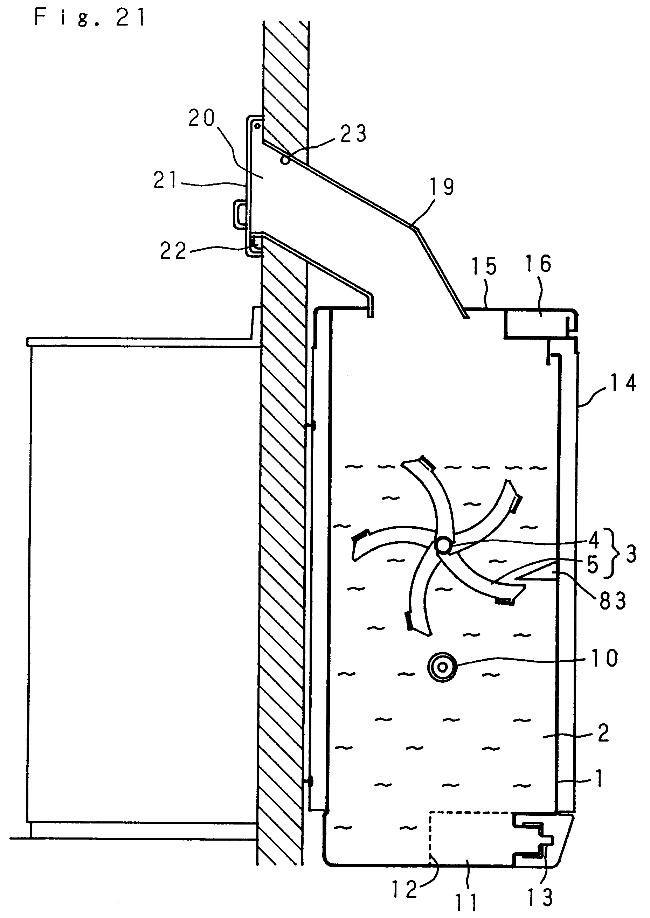

The sixth embodiment of the invention will now be described with reference to Fig.20 and Fig.21. The components identical with those in the first embodiment are assigned with the same numerals and a description thereof will be omitted.

In Fig.20 and Fig.21, a side wall of the process vessel 1 is provided on the inner surface thereof with fixed teeth 83 formed by cutting and raising parts of a stainless steel sheet. An array of the fixed teeth 83 extends to near the mixing vanes 5 so that kitchen garbage is ground between the fixed teeth 83 and the mixing vanes 5 as the mixer screw 3 rotates. According to the sixth embodiment, because kitchen garbage is ground between the fixed teeth 83 and the mixer screw 3, the kitchen garbage can be decomposed and disposed of in a short period of time in a simple constitution, thereby improving the efficiency of garbage disposal.

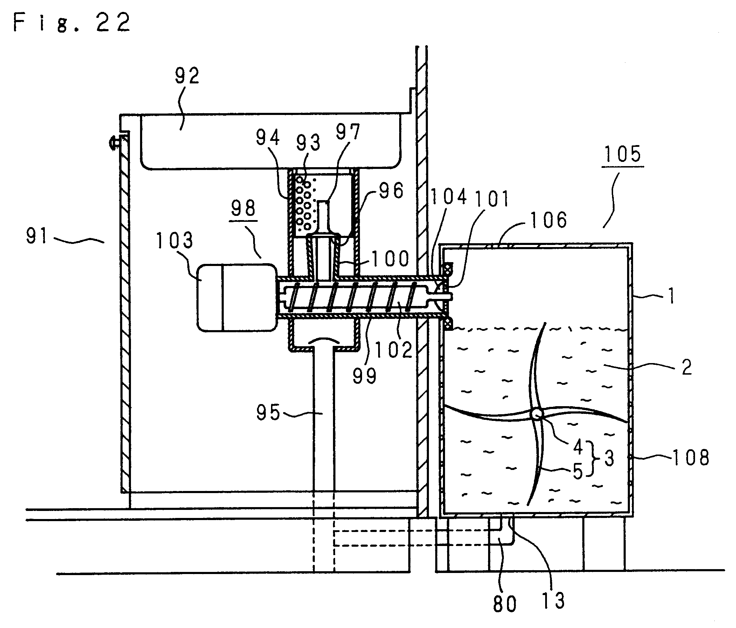

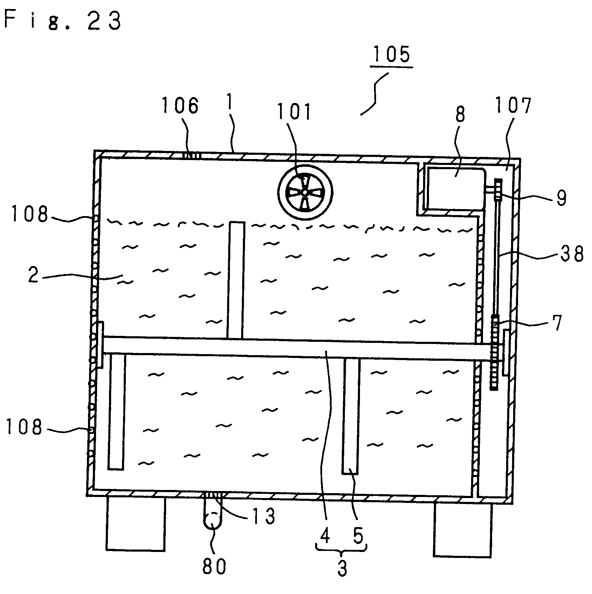

The seventh embodiment of the invention will now be described below with reference to Fig.22 through Fig.24. The components identical with those of the embodiments described above are assigned with the same numerals and a description thereof will be omitted.

Numeral 91 denotes a sink cabinet and numeral 92 denotes a sink, having a garbage receiving section 94 wherein a drain basket 93 is detachably housed at the bottom thereof. The bottom of the garbage receiving section 94 receives a drainage pipe 95 connected thereto, and the drain basket 93 has a garbage discharge opening 96 formed in the bottom thereof to communicate with a garbage discharge port 100 of the grinder 98 installed in the lower space of the sink cabinet 91. A garbage thrust rod 97 is inserted into the garbage discharge opening 96. During kitchen work, the garbage discharge opening 96 in the drain basket 93 is blocked by the garbage thrust rod 97 to prevent water from the sink 92 from flowing into the garbage discharging port 100 of the grinder 98.

The grinder 98 has the garbage discharge port 100 of a transfer tube 99 being connected to the garbage discharge opening 96 of the drainage basket 93 with fixed teeth 101 being installed at the tip thereof. A screw 102 driven to rotate by a motor 103 is installed in the transfer tube 99. The screw 102 has rotary teeth 104 at the tip thereof, and rotates to move the garbage charged through the garbage discharge port 100 toward the tip, thereby to grind the garbage by means of the rotary teeth 104 and the fixed teeth 101.

Numeral 105 denotes a process vessel unit installed outdoors, which is divided into a process vessel 1 and a drive chamber 107 where the motor 8 to drive the mixer screw 3 is housed. A part of the process vessel 1 is penetrated by the end the transfer tube 99 of the grinder 98 which is installed in the lower part of the sink cabinet 91, so that the kitchen garbage ground by the grinder 98 is charged into the process vessel 1. An exhaust port 106 is formed in the top surface of the process vessel 1, and the surrounding wall of the process vessel 1 has a heater wire 108 embedded therein to keep the temperature in the process vessel 1 within a specified range.

During kitchen work, the garbage discharge opening 96 in the drain basket 93 is blocked by inserting the garbage thrust rod 97 into the garbage discharge port 100 of the grinder 98. Under this condition, water from the sink 92 is discharged through the drain basket 93 into the drainage pipe 95. To dispose of garbage, the garbage thrust rod 97 is pulled out and an operation switch not shown in the drawing is operated to start the motor 103 and rotate the screw 102, while charging the garbage by means of the garbage thrust rod 97 through the garbage discharge opening 96 of the drain basket 93 into the garbage discharge port 100. The garbage charged through the garbage discharge port 100 into the grinder 98 is transferred by the screw 102 to the tip of the transfer tube 99 where it is ground by the fixed teeth 101 and the rotary teeth 104, and then charged into the process vessel 1.

In synchronization with the start of the motor 103, the motor 8 starts to drive the mixer screw 3 at the same time to mix the garbage discharged from the grinder 98 and the medium 2. When charging of the garbage into the garbage discharge port 100 is completed, a switch not shown is operated to stop the operation of the motor 103 which drives the grinder 98. The motor 103 stops upon a lapse of a period of time long enough to discharge the garbage in the grinder 98 into the process vessel 1 after the switch has been operated, in order to prevent the garbage from remaining in the grinder 98 and becoming rotten therein. After the motor 103 is stopped, the motor 8 of the mixer screw 3 is stopped upon lapse of a specified period of time so that the garbage discharged from the grinder 98 and the medium 2 are mixed sufficiently.

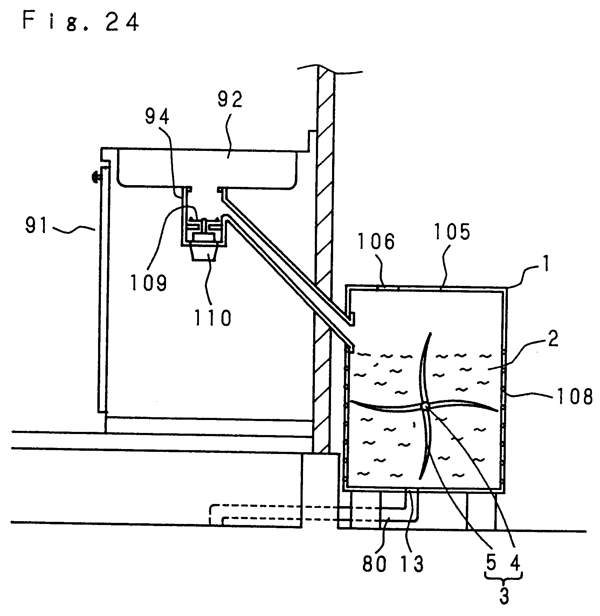

Although the above embodiment has such a constitution that the garbage is transferred by the screw 102 to the tip of the transfer tube 99 and is ground by the fixed teeth 101 and the rotary teeth 104, it may be embodied in such a constitution as shown in Fig. 24 that a disk cutter 109 installed at the bottom of the garbage receiver 94 is driven by a motor 110 to rotate and grind the garbage which is then discharged into the process vessel 1.

In the seventh embodiment, because kitchen garbage which has been ground by the grinder is charged into the process vessel 1, the garbage can be decomposed and disposed of in the process vessel 1 in a short period of time thereby making the garbage disposal process easier. Also because the process vessel is installed outdoors, the housing space of the sink cabinet can be utilized effectively.

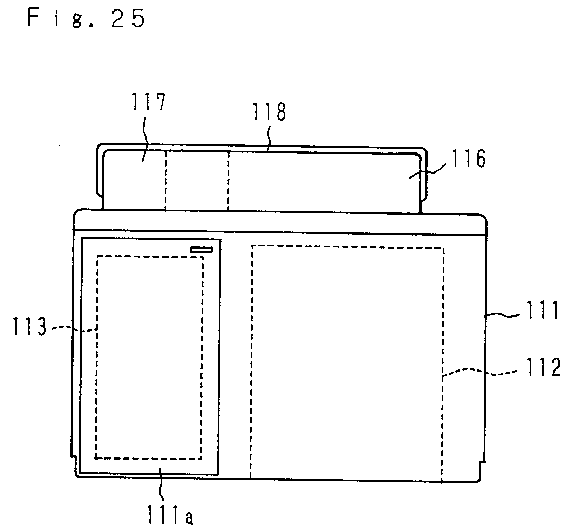

The eighth embodiment of the invention will now be described below with reference to Fig.25 through Fig.28. The eighth embodiment provides a garbage disposal system having a kitchen garbage disposal apparatus as described above wherein kitchen garbage is disposed of the decomposing action of aschelminthes and micro-organisms, and a trash bin to accommodate ordinary trash which cannot be decomposed by the aschelminthes and micro-organisms, being installed together.

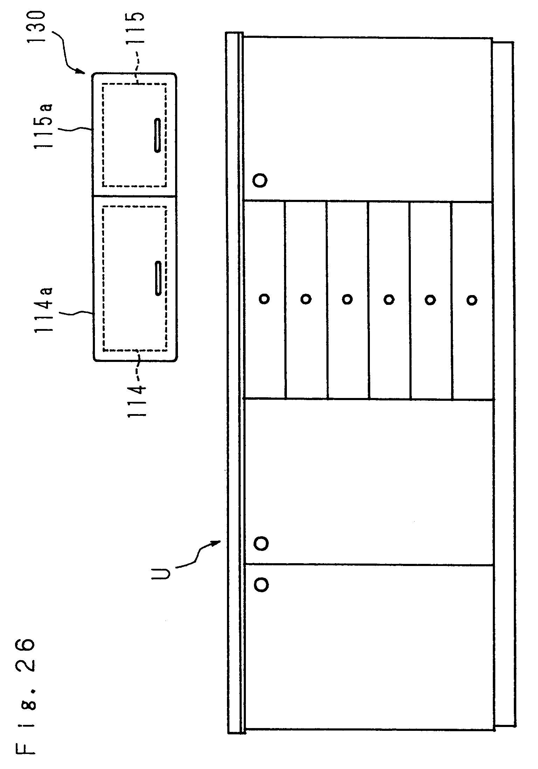

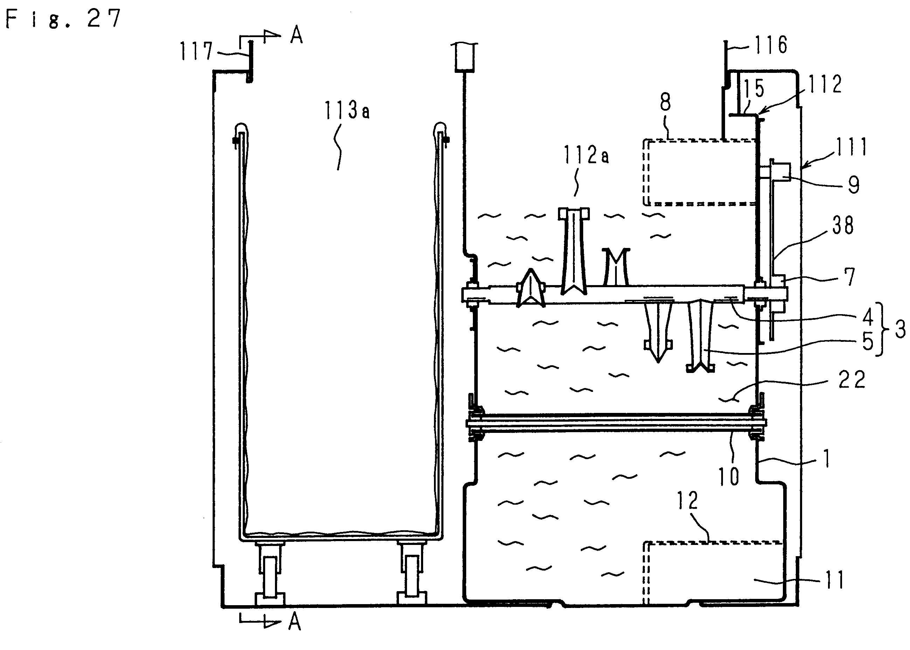

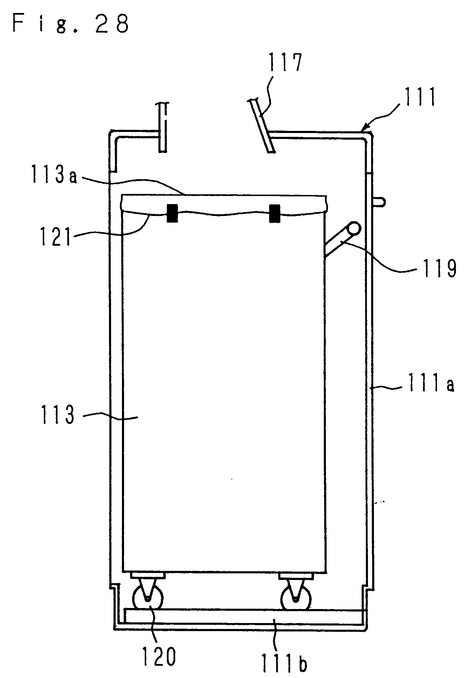

Fig.25 is a front view drawing illustrative of the garbage disposal system in the eighth embodiment installed outside the kitchen. Fig.26 is a front view drawing illustrative of a charging port wherein kitchen garbage and ordinary trash are charged, viewed from the inside of the kitchen. Fig.27 is an enlarged cross sectional drawing in the front view illustrative of the garbage disposal system. Fig.28 is a cross sectional drawing in the side view in A-A line in Fig.27. The components identical with those in the embodiments described above are assigned with the same numerals and a description thereof will be omitted.

The garbage disposal system is either installed in a room separated from the kitchen by a partition wall or installed outdoors, with a kitchen garbage (organic wastes) disposal apparatus 112 and an ordinary trash bin 113 being housed in an outer housing 111 made of synthetic resin or stainless steel formed in a hollow rectangular parallelepiped. The kitchen garbage disposal apparatus 112 and the trash bin 113 are communicated with the kitchen garbage charging port 114 and the ordinary trash charging port 115 of the charging port section 130 opening in the partition wall, respectively, via a kitchen garbage discharge passage 116 and an ordinary trash discharge passage 117. The kitchen garbage charging port 114 and the ordinary trash charging port 115 open in a wall or the like right above a cooking unit U in the kitchen as shown in Fig.26, and are opened and closed by lids 114a and 115a which swing around a horizontal axis, respectively.

Kitchen garbage (organic wastes) generated in the kitchen is put into the kitchen garbage charging port 114 directly or after being packed in a bag made of a biodegradable material such as one based on a cellulose derivative, chitin and other natural polysaccharides, natural fibers, reproduced natural fibers, synthesized high polymers such as caprolactam, polyethylene succinate or the like, or natural high polymers such as hydroxybutyrate. Ordinary trash is put into the ordinary trash charging port 115 directly or after being packed in a waste bag.

The outer housing 111 has a door 111a which swings open around a vertical axis provided in the front wall opposing the trash bin 113 housing portion, to allow the trash bin 113 to be pulled out of and put into the housing portion. The kitchen garbage discharge passage 116 and the ordinary trash discharge passage 117 are formed by dividing the inner space of the charging port section 130 of a rectangular tube by means of a partition wall, and installed to penetrate the partition wall of the kitchen while sloping downward. The top ends of the kitchen garbage discharge passage 116 and the ordinary trash discharge passage 117 communicate with the kitchen garbage charging port 114 and the ordinary trash charging port 115, and the lower ends thereof face the respective receiving ports 112a and 113a of the kitchen garbage disposal apparatus 112 and the trash bin 113, respectively.

The constitution of the kitchen garbage disposal apparatus 112 installed in the outer housing 111 is similar to that of the first embodiment and a description thereof will be omitted. The trash bin 113 to contain ordinary trash is formed in a hollow rectangular parallelepiped with the top being open and the bottom being closed, having a handle 119 on the door 111 side near the side wall top and wheels 120 fixed at four corners of the bottom, and is placed on a pair of rails 111b installed on the bottom of the outer housing 111. The rails 111b are installed parallel with the bottom of the outer housing 111 from the door 111a side extending to the inside, to allow the trash bin 113 to be pulled out of the outer housing 111 by opening the door 111a. The trash bin 113 is provided with a waste bag 121 covering the inside thereof with the opening end being folded over the rim of the receiving port 113a of the trash bin 113 and fixed thereon.

Kitchen garbage (organic wastes) generated in the kitchen is packed in a bag made of a biodegradable material and is put into the kitchen garbage discharge passage 116 through the kitchen garbage charging port 114 by opening the lid 114a. Closing the lid 114a turns on the sensor to cause the motor 8 to start to drive the mixer screw 3. The mixing vanes 5 of the mixer screw 3 tear open the bag and mix the kitchen garbage and the bag with the medium 2. Then the kitchen garbage and the bag are decomposed and disposed of by the food chain of the aschelminthes and micro-organisms similarly to the case of the first embodiment.

Ordinary trash which cannot be decomposed by the aschelminthes and micro-organisms is packed in a waste bag made of polyethylene or the like and is charged into the ordinary trash charging port 115 (by opening the lid 115a). The waste bag passes through the ordinary trash discharge passage 117 and drops into the waste bag 121 provided in the trash bin 113. To dump the trash contained in the trash bin 113, the door 111a is opened and the handle 119 is pulled, and the trash bin 113 moves out of the outer housing 111 over the rails 111b. The trash bin 113 can be pushed to the dump site where the contents are dumped.

In the eighth embodiment, because kitchen garbage (organic wastes) is accommodated in the kitchen garbage disposal apparatus and decomposed into inorganic materials and ordinary trash is accommodated in the trash bin simply by putting them into the respective charging ports, kitchen garbage and ordinary trash can be easily disposed of separately and a foul odor is prevented from entering the kitchen.

## Claims

1. Kitchen garbage disposal system, comprising:
a process vessel (1) for being installed outdoors and containing a medium (2),
mixing means (3), installed in said process vessel (1), for mixing the medium (2) and kitchen garbage charged into said process vessel, and
means (18) for leading air from inside the process vessel (1) to the outside atmosphere,
**characterized by**
a kitchen garbage discharge port (20) positioned indoors,
a discharge passage (19) communicating said kitchen garbage discharge port (20) and said process vessel (1), and
said leading means being an air blower (18) which purges the air taken into said process vessel (1) from said kitchen garbage discharge port (20) through said discharge passage (19) to the outside atmosphere.

2. Kitchen garbage disposal system as claimed in Claim 1, wherein said kitchen garbage discharge port (20) is formed in a wall surface of the house or a kitchen furniture.

3. Kitchen garbage disposal system as claimed in Claims 1 or 2, wherein at least the inner surface of said discharge passage (19) is made of a low friction material.

4. Kitchen garbage disposal system as claimed in one of Claims 1-3, further comprising:
detecting means (22,31,32,36,40) for detecting kitchen garbage charged into said process vessel (1) from said kitchen garbage discharge port (20); and
control means (26) for controlling the operation of said mixing means (3) based on the result of detection by said detecting means (22,31,32,36,40).

5. Kitchen garbage disposal system as claimed in one of Claims 1-4, further comprising, water sprinkling means (23) for sprinkling water in said discharge passage (19).

6. Kitchen garbage disposal system as claimed in Claim 5, further comprising, detecting means (22,31,32,36,40) for detecting kitchen garbage charged into said process vessel (1) from said kitchen garbage discharge port (20); and
control means (26) for controlling the operation of said water sprinkling means (23) based on the result of detection by said detecting means (22,31,32,36,40).

7. Kitchen garbage disposal system as claimed in one of Claims 1-6, further comprising, overload detecting means (77,78,79) for detecting an overload state where there is too much kitchen garbage for aschelminthes and micro-organisms cultivated in the medium (2) to decompose the kitchen garbage.

8. Kitchen garbage disposal system as claimed in Claim 7, further comprising, display means for displaying an overload state when said overload detecting means (77,78,79) detects the overload state.

9. Kitchen garbage disposal system as claimed in one of Claims 1-8, wherein a mount frame (70) having said kitchen garbage discharge port (20) is installed on a window frame of the house.

10. Kitchen garbage disposal system comprising:
a process vessel (1) for being installed outdoors, for containing a medium (2) and for receiving kitchen garbage; and
mixing means (3), installed in said process vessel (1), for mixing the kitchen garbage and the medium (2),
**characterized by**
a kitchen garbage discharge port (100) positioned indoors; and
grinding means (98) for grinding kitchen garbage charged through said kitchen garbage discharge port (100) and discharging the ground kitchen garbage into the vessel (1).

11. Kitchen garbage disposal system, comprising:
a main apparatus (111) for being installed outdoors and provided with a kitchen garbage disposal apparatus (112) having a medium (2) contained therein and mixing means (3) for mixing kitchen garbage charged into said kitchen gargabe disposal apparatus (112) and the medium (2),
**characterized by**
the main apparatus being provided with a trash bin (113) to contain ordinary trash which cannot be decomposed by microorganisms;
a charging port section (130) being positioned indoors and having a first charging port (114) for charging kitchen garbage and a second charging port (115) for charging ordinary trash;
a first communicating passage (116) communicating said first charging port (114) and said kitchen garbage disposal apparatus (112); and
a second communicating passage (11) communicating said second charging port (115) and said trash bin (113).

## Patentansprüche

1. Entsorgungssystem für Küchenabfälle, das umfaßt:
einen Verarbeitungsbehälter (1), der außerhalb des Hauses zu installieren ist und ein Medium (2) enthält,
eine Mischvorrichtung (3), die in dem Verarbeitungsbehälter (1) installiert ist, um das Medium (2) und die in den Verarbeitungsbehälter eingefüllten Küchenabfälle zu mischen, und
eine Vorrichtung (18), um Luft von innerhalb des Verarbeitungsbehälters (1) in die äußere Atmosphäre zu leiten,
dadurch gekennzeichnet, daß
sich eine Abgabeöffnung (20) für Küchenabfälle im Hausinneren befindet,
ein Abgabeschacht (19) die Abgabeöffnung (20) für Küchenabfälle und den Verarbeitungsbehälter (1) verbindet, und
die Leitungsvorrichtung ein Luftgebläse (18) ist, das die ins Innere des Verarbeitungsbehälters (1) von der Abgabeöffnung (20) für Küchenabfälle eingeleitete Luft durch den Abgabeschacht (19) in die äußere Atmosphäre abführt.

2. Entsorgungssystem für Küchenabfälle nach Anspruch 1, wobei die Abgabeöffnung (20) für Küchenabfälle in einer Oberfläche der Hauswand oder einem Küchenmöbel ausgebildet ist.

3. Entsorgungssystem für Küchenabfälle nach Anspruch 1 oder 2, wobei mindestens die innere Oberfläche des Abgabeschachtes (19) aus einem Material mit geringer Reibung besteht.

4. Entsorgungssystem für Küchenabfälle nach einem der Ansprüche 1-3, ferner mit:
einer Detektionsvorrichtung (22, 31, 32, 36, 40), um Küchenabfälle zu detektieren, die von der Abgabeöffnung (20) für Küchenabfälle in den Verarbeitungsbehälter (1) gegeben werden, und
einer Steuervorrichtung (26), um den Betrieb der Mischvorrichtung (3) auf der Grundlage der Ergebnisse der Detektion durch die Detektionsvorrichtung (22, 31, 32, 36, 40) zu steuern.

5. Entsorgungssystem für Küchenabfälle nach einem der Ansprüche 1-4, ferner mit einer Wasserberieselungsvorrichtung (23), um den Abgabeschacht (19) mit Wasser zu berieseln.

6. Entsorgungssystem für Küchenabfälle nach Anspruch 5, ferner mit einer Detektionsvorrichtung (22, 31, 32, 36, 40), um Küchenabfälle zu detektieren, die von der Abgabeöffnung (20) für Küchenabfälle in den Verarbeitungsbehälter (1) gegeben werden, und
eine Steuervorrichtung (26), um den Betrieb der Wasserberieselungsvorrichtung (23) auf der Grundlage der Ergebnisse der Detektion durch die Detektionsvorrichtung (22, 31, 32, 36, 40) zu steuern.

7. Entsorgungssystem für Küchenabfälle nach einem der Ansprüche 1-6, ferner mit einer Überlastungsdetektionsvorrichtung (77, 78, 79), um einen Überlastungszustand zu detektieren, in dem es zu viele Küchenabfälle gibt, so daß die im Medium (2) gehaltenen Aschelminthen und Mikroorganismen die Küchenabfälle nicht mehr zersetzen können.

8. Entsorgungssystem für Küchenabfälle nach Anspruch 7, ferner mit einer Anzeigevorrichtung, um einen Überlastungszustand anzuzeigen, wenn die Überlastungsdetektionsvorrichtung (77, 78, 79) den Überlastungszustand detektiert.

9. Entsorgungssystem für Küchenabfälle nach einem der Ansprüche 1-8, wobei ein Montagerahmen (70), der die Abgabeöffnung (20) für Küchenabfälle aufweist, an einem Fensterrahmen des Hauses installiert ist.

10. Entsorgungssystem für Küchenabfälle mit:
einem außerhalb des Hauses vorgesehenen Verarbeitungsbehälter (1), der ein Medium (2) enthält und dazu dient, Küchenabfälle aufzunehmen, und
einer Mischvorrichtung (3), die in dem Verarbeitungsbehälter (1) zum Mischen der Küchenabfälle und des Mediums (2) angeordnet ist,
gekennzeichnet durch
eine Abgabeöffnung (100) für Küchenabfälle, die im Hausinneren angeordnet ist, und
eine Mahlvorrichtung (98), um Küchenabfälle, die durch die Abgabeöffnung (100) für Küchenabfälle eingefüllt werden, zu zermahlen und die zermahlenen Küchenabfälle in den Behälter (1) abzugeben.

11. Entsorgungssystem für Küchenabfälle, mit:
einer Hauptvorrichtung (111), die außerhalb eines Hauses anzuordnen ist und eine Entsorgungsvorrichtung (112) für Küchenabfälle aufweist, die ein darin enthaltenes Medium (2) und eine Mischvorrichtung (3) zum Mischen der in die Entsorgungsvorrichtung (112) für Küchenabfälle gegebenen Küchenabfälle und des Mediums aufweist,
dadurch gekennzeichnet, daß
die Hauptvorrichtung einen Mülleimer (113) für gewöhnlichen Müll aufweist, der nicht von Mikroorganismen zersetzt werden kann;
ein Zuführungsteil (130) sich im Hausinneren befindet und eine erste Zuführungsöffnung (114) zur Zuführung von Küchenabfällen und eine zweite Zuführungsöffnung (115) zur Zuführung von gewöhnlichem Müll aufweist;
ein erster Verbindungsschacht (116) die erste Zuführungsöffnung (114) und die Entsorgungsvorrichtung (112) für Küchenabfälle verbindet, und
ein zweiter Verbindungsschacht (11) die zweite Zuführungsöffnung (115) und den Mülleimer (113) verbindet.

## Revendications

1. Système d'élimination des ordures ménagères, comprenant :
une cuve de traitement (1) destinée à être installée à l'extérieur de la maison et contenant un milieu (2),
des moyens de mélange (3) installés dans la cuve de traitement (1) et servant à mélanger le milieu (2) et les ordures ménagères introduites dans la cuve de traitement et
des moyens (18) servant à conduire l'air de l'intérieur de la cuve de traitement (1) jusqu'à l'atmosphère extérieure,
caractérisé :
par une ouverture d'évacuation d'ordures ménagères (20) disposée à l'intérieur de la maison,
par un passage d'évacuation (19) faisant communiquer l'ouverture d'évacuation d'ordures ménagères (20) et la cuve de traitement (1) et
par le fait que les moyens conduisant l'air consistent en un ventilateur d'air (18) qui purge l'air prélevé dans la cuve de traitement (1), de l'ouverture d'évacuation d'ordures ménagères (20) jusqu'à l'atmosphère extérieure en passant par le passage d'évacuation (19).

2. Système d'élimination d'ordures ménagères tel que revendiqué à la revendication 1, dans lequel l'ouverture d'évacuation d'ordures ménagères (20) est formée dans une surface de paroi de la maison ou d'un meuble de cuisine.

3. Système d'élimination d'ordures ménagères tel que revendiqué à la revendication 1 ou 2, dans lequel au moins la surface intérieure du passage d'évacuation (19) est en une matière à faible frottement.

4. Système d'élimination d'ordures ménagères tel que revendiqué à l'une des revendications 1-3, comprenant en outre :
des moyens de détection (22, 31, 32, 36, 40) servant à détecter les ordures ménagères introduites dans la cuve de traitement (1) à partir de l'ouverture d'évacuation d'ordures ménagères (20) et
des moyens de réglage (26) servant à régler le fonctionnement des moyens de mélange (3) sur la base du résultat de détection fourni par les moyens de détection (22, 31, 32, 36, 40).

5. Système d'élimination d'ordures ménagères tel que revendiqué à l'une des revendications 1-4, comprenant en outre des moyens d'arrosage d'eau (23) servant à répandre de l'eau dans le passage d'évacuation (19).

6. Système d'élimination d'ordures ménagères tel que revendiqué à la revendication 5, comprenant en outre des moyens de détection (22, 31, 32, 36, 40) servant a détecter les ordures ménagères introduites dans la cuve de traitement (1) à partir de l'ouverture d'évacuation d'ordures ménagères (20) et
des moyens de réglage (26) servant à régler le fonctionnement des moyens d'arrosage d'eau (23) sur la base du résultat de détection fourni par les moyens de détection (22, 31, 32, 36,40).

7. Système d'élimination d'ordures ménagères tel que revendiqué à l'une des revendications 1-6, comprenant en outre des moyens de détection de surcharge (77, 78, 79) servant à détecter un état de surcharge dans lequel il se présente trop d'ordures ménagères pour que les aschelminthes et micro-organismes cultivés dans le milieu (2) décomposent les ordures ménagères.

8. Système d'élimination d'ordures ménagères tel que revendiqué à la revendication 7, comprenant en outre des moyens de visualisation servant à visualiser un état de surcharge lorsque les moyens de détection de surcharge (77, 78, 79) détectent l'état de surcharge.

9. Système d'élimination d'ordures ménagères tel que revendiqué à l'une des revendications 1-8, dans lequel un châssis de montage (70) comportant l'ouverture d'évacuation d'ordures ménagères (20) est installé sur un châssis de fenêtre de la maison.

10. Système d'élimination d'ordures ménagères comprenant :
une cuve de traitement (1) destinée à être installée à l'extérieur de la maison et servant à contenir un milieu (2) et à recevoir des ordures ménagères et
des moyens de mélange (3) installés dans la cuve de traitement (1) et
servant à mélanger les ordures ménagères et le milieu (2),
caractérisé par :
une ouverture d'évacuation d'ordures ménagères (100) disposée à l'intérieur de la maison et
des moyens de broyage (98) servant à broyer les ordures ménagères introduites par l'ouverture d'évacuation d'ordures ménagères (100) et à évacuer dans la cuve (1) les ordures ménagères broyées.

11. Système d'élimination d'ordures ménagères, comprenant :
un appareil principal (111) destiné à être installé à l'extérieur de la maison et pourvu d'un appareil d'élimination d'ordures ménagères (112) dans lequel un milieu (2) est contenu et qui comporte des moyens de mélange (3) servant à mélanger les ordures ménagères introduites dans l'appareil d'élimination d'ordures ménagères (112) et le milieu (2),
caractérisé :
par le fait que l'appareil principal est pourvu d'une poubelle à détritus (113) destinée à contenir des détritus ordinaires qui ne peuvent pas être décomposés par des micro-organismes,
par le fait qu'une section d'ouvertures d'introduction (130) est disposée à l'intérieur de la maison et comporte une première ouverture d'introduction (114) destinée à l'introduction des ordures ménagères et une seconde ouverture d'introduction (115) destinés à l'introduction des détritus ordinaires,
par un premier passage de communication (116) faisant communiquer la première ouverture d'introduction (114) et l'appareil d'élimination d'ordures ménagères (112) et
par un second passage de communication (117) faisant communiquer la seconde ouverture d'introduction (115) et la poubelle à détritus (113).
